# EUROPEAN PATENT SPECIFICATION

(11) **EP 3 934 172 B1**
(45) Date of publication and mention of the grant of the patent: **25.11.2026**
(21) Application number: 20182921.5
(22) Date of filing: 29.06.2020
(51) Int. Cl.: H04L 41/0813, H04L 41/14, H04L 41/5025, H04L 41/147

(54) **METHOD AND SYSTEM FOR A MANAGEMENT SYSTEM WITH BIG DATA ANALYTICS FUNCTION**
VERFAHREN UND SYSTEM FÜR EIN VERWALTUNGSSYSTEM MIT GROSSER DATENANALYSEFUNKTION
PROCÉDÉ ET SYSTÈME POUR UN SYSTÈME DE GESTION AVEC FONCTION D'ANALYSE DE DONNÉES DE GRANDE TAILLE

(43) Date of publication of application: 05.01.2022
(73) Proprietor: Deutsche Telekom AG, 53113 Bonn (DE)
(72) Inventor: LESSMANN, Johannes, 51647 Gummersbach (DE)
(74) Representative: Vossius & Partner Patentanwälte Rechtsanwälte mbB

(56) References cited:
- US-A1- 2014 003 232
- US-A1- 2018 246 746
- US-B2- 10 439 886

## Description

The invention relates to a method and system for a management system with big data analytics function. In particular, the invention relates to a management system for operating a telecommunication network.

The telecommunication infrastructure of a telecommunication network is preferably managed by a Management System. The term Management System, MS, hereinafter encompasses Element Management Systems, EMS, Network Management Systems, NMS, or Orchestrators.

A telecommunication infrastructure managed by the MS may comprise physical components as well as virtualized components. The MS may perform many different management tasks with respect to the telecommunication infrastructure, e.g. configuring, managing, and/or controlling network components but also resolving a network malfunction.

The term managing, unless stated otherwise or being obvious to the skilled person, hereinafter comprises one or more of: configuring, controlling, optimizing, and clearing.

For this purpose, a MS collects, analyzes and/or manages data from a plurality of data points. Furthermore, the MS employs a computational model based on said data points, wherein said model corresponds to the state of the managed infrastructure.

In detail, the model comprises one or more Managed Objects, MO, for which data is collected in the infrastructure.

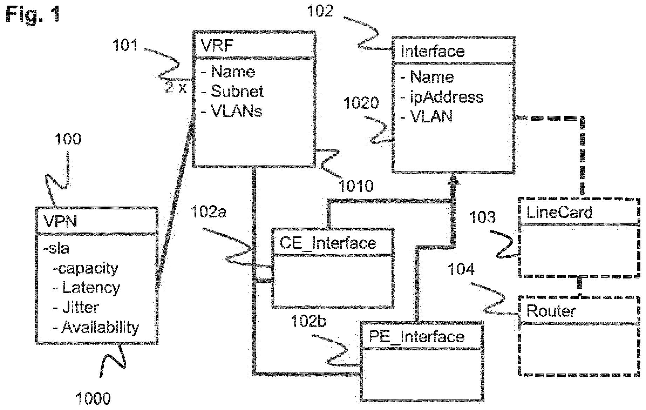

Fig. 1 shows a model employed by a MS according to an embodiment of the invention. In particular, Fig. 1 shows a model for a Virtual Private Network 100, VPN, which is a service, e.g. provided from a network operator to an end user. The VPN 100 is provided from the so-called transport network of the network operator. The VPN 100 comprises at least two Virtual Routing & Forwarding components 101, VRF, which are each coupled to an interface 102 of a router. The interface may be a Customer Edge, CE, interface 102a or a Provider Edge, PE, interface 102b. An interface may have attributes comprising - among others - one or more of: a name, an IP-address, a VLAN ID. An interface is a component of a linecard, which in turn is part of a router. These two items were included to improve intelligibility.

It is noted that the attributes of the real-world objects discussed with respect to embodiments of the invention correspond to the MO of the model and vice versa. That is, e.g. the capacity, latency, jitter, and availability of the VPN of the above embodiment are MOs.

It is general aspect of the invention that the model and/or the attributes thereof provide a current status of the state of the infrastructure, i.e. the physical and virtual infrastructure of the network operator.

Consequently, the algorithms of the MS, i.e. the control, optimization, and/or assurance algorithms of the MS can only be based on MO which is comprised in the model. For example, in case the model of Fig. 1 does not comprise the attribute, i.e. MO, "latency", it is not possible to implement an algorithm in the MS which can manipulate the latency of the VPN 100.

Therefore, it is a problem that the model of the MS must anticipate all possibly relevant components of the infrastructure at the time of the design of the MS, at which little is known about the final infrastructure. This is of particular relevance, because infrastructure and services thereof are evolving more and more rapidly, which renders an anticipated model obsolete.

On the other hand, big-data systems allow collecting an ever increasing amount of data. The term big data relates to a field that treats ways to analyze, systematically extract information from, or otherwise deal with data sets that are too large or complex to be dealt with by traditional data-processing application software.

With respect to the present invention such big data preferably comprises:
a) data, which can be identified as relevant for managing an infrastructure by a data mining method, but can not be identified by a human system designer when anticipating the model.
b) data, originating form alien systems, i.e. systems not under direct access of the MS, which however can still be used for managing the infrastructure.

However, even if a MS could incorporate all this big data, the following problems would arise. The data needs to be stored consistently somewhere central, because it can not be duplicated for any MS. A MS based on the typical performance by design is not suitable to process big data.

In other words, at the time the MS including the MO is designed, not all possible MO can be identified and included. Furthermore, big data analytics can not be integrated into a MS. Still further, it is basic concept of big data that the outcome can not be anticipated while the MO need to be anticipated at the time of the design of a MS.

US 10 439 886 B2 relates to a system and method for dynamically (re)configuring a service network based on profile information obtained from a Big Data Analytics platform. Received dynamic situation profiles relative to network states, subscriber states, etc. may be compared against corresponding characteristic situation profiles.

US 2014/003232 A1 relates to techniques for providing feedback loops for service engineered paths. A service node comprising an interface and a control unit may implement the techniques. The interface receives traffic via a path configured within a network to direct the traffic from an ingress network device of the path to the service node. The control unit applies one or more services to the traffic received via the path and generates service-specific information related to the application of the one or more services to the traffic.

US 2018/246746 A1 relates to a method including, with an analytics component, receiving performance data from a Virtual Network Function (VNF). The VNF includes a plurality of VNF components running on a plurality of virtual machines. The method further includes, with the analytics component, performing an analytics function on the performance data.

It is therefore an object of the present invention to provide a method and system for a management system with big data analytics function.

The invention is set out in the appended set of claims. Any references in the following description to embodiments, objects, aspects and/or examples, which are not covered by the appended claims, are considered as not being part of the present invention.

It is a general aspect of the invention that the MS comprises one or more MO which are filled from an external source, preferably a big-data system. The data for these MO are aggregated by the external source, preferably from a high amount of external data and preferably into a small number of aggregated data for the MO. Only this small number of MO needs to be exported into the MS, which does not influence the performance of the MS significantly.

It is a further general aspect of the invention that an external source, preferably a big data system, can manipulate a specific MO, preferably via a suitable Application Programming Interface, API. This allows using external data for managing the infrastructure with the MS.

It is a core concept of the invention that the management of traffic in a backbone infrastructure may be improved by incorporating weather data or data about major events such as a soccer game or a concert. That is, data is analyzed that has no direct relation to the managed infrastructure.

The traffic routing in an IP-based backbone network of a network operator is based on a control protocol, which is exchanged between routers, e.g. an OSPF and an Intermediate System to Intermediate System Protocol, IS-IS, protocol.

It is a further core concept of the invention that in order to optimize the traffic routing in the backbone network the external system, preferably the big data system, manipulates the OSPF weights of links in the backbone. The path calculation systems, regardless of whether in a router or in the MS, use said weights to calculate the routing.

It is an advantage of the invention that during the development of a MS not all possible cases must be anticipated. Furthermore, a large number of data can be used for the management without affecting the performance of the MS. The data can be centralized. Big-data system can contribute to the MS by aggregating big data.

### Brief description of the Drawings

The above-described objects, advantages, and aspects of the present invention, as well as others, will be more readily understood from the following detailed description of certain preferred embodiments of the invention, when considered in conjunction with the accompanying drawings in which:
- Fig. 1: shows a model employed by a MS according to an embodiment of an example;
- Fig. 2: shows a MS according to an embodiment of an example;
- Fig. 3: shows a flow diagram of a traffic routing according to an embodiment of the example according to Fig. 2;
- Fig. 4: shows a MS according to an embodiment of the invention; and
- Fig. 5: shows a flow diagram of a traffic routing according to an embodiment of the invention according to Fig. 4.

### Detailed description of the Drawings

Hereinafter, embodiments disclosed in this specification will be described in detail with reference to the accompanying drawings. In this specification, the same or equivalent components may be provided with the same or similar reference numbers even in different embodiments, and description thereof will not be repeated. A singular representation may include a plural representation unless it represents a definitely different meaning from the context. In describing the present invention, if a detailed explanation for a related known technology or construction is considered to unnecessarily divert the gist of the present disclosure, such explanation has been omitted but would be understood by those skilled in the art. It should be noted that the attached drawings are provided to facilitate understanding of the embodiments disclosed in this specification, and should not be construed as limiting the technical idea disclosed in this specification by the attached drawings.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components.

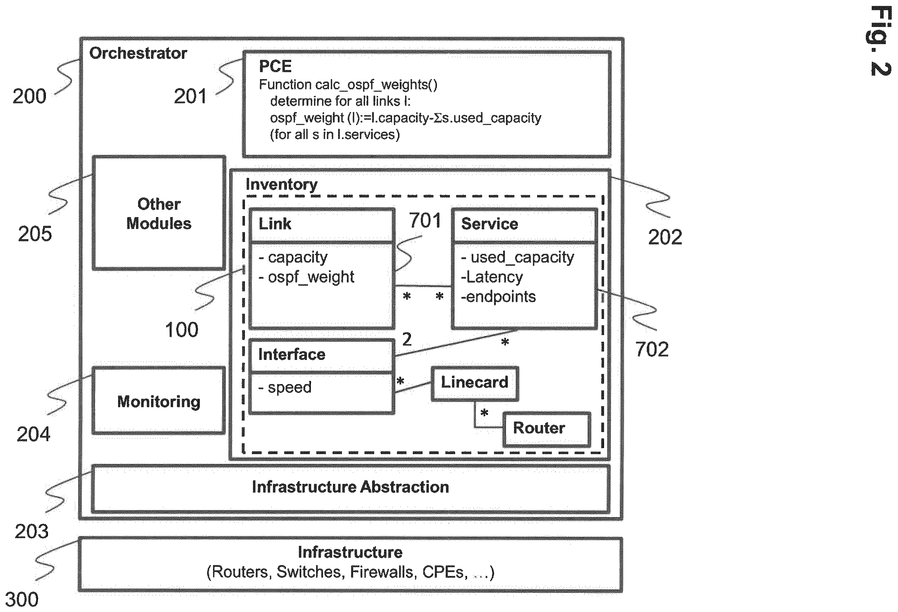

Fig. 2 shows a MS 200 according to an embodiment of an example. In detail, Fig. 2 shows an orchestrator 200 as an embodiment of an MS 200 according to the example. This MS 200 operates on the backbone of a telecommunication infrastructure 300, preferably to manage the traffic routing, also referred to as traffic engineering, therethrough. The infrastructure 300 comprises at least one of the following: routers, switches, firewalls, CPEs.

The managing component for traffic engineering is the Path Computation Engine, PCE, 201. The orchestrator 200 preferably further comprises an inventory 202, an infrastructure abstraction layer 203, a monitoring component 204, and other modules 205. The infrastructure abstraction layer transforms all the configuration parameters in the infrastructure, which can vary significantly across vendors and devices, into the MS-internal model representation.

The inventory 202 comprises a model, preferably a model 100, i.e. a model of the physical and logical components. In this case the model comprises links, services, interfaces, linecards and routers. To increase intelligibility only one of the aforementioned physical components is shown in Fig. 2. For each link the model comprises MOs 701, preferably the capacity and a ospf weight. For each Service the model comprises MOs 702, preferably the used capacity, the latency, and endpoints. Accordingly, the algorithm of the PCE 201 can access said MOs in order to calculate the traffic routing.

In an embodiment of the example, the MS 200 manages the infrastructure 300 based on weights. In the embodiment of Fig. 2 a weight is calculated for every link in the infrastructure 300 based on Open Shortest Path First, OSPF, which is a routing protocol for Internet Protocol, IP, networks. OSPF is an established protocol which controls the traffic based on said weights. In order to manipulate the traffic steering, one has to manipulate the weights.

In a preferred embodiment the weight is calculated by determining the capacity of a link, i.e. l.capacity, and subtracting the "used" capacity, which is the sum of all the required capacity of the services, i.e. sum (s.used_capacity), and/or the traffic which already uses this link. Therefore, the weight of a link corresponds to the remaining capacity of said link. Therefore, links with small remaining capacity are prioritized by the routing less than links with high remaining capacity.

It is noted that the "*" and "2" as shown next to the links between elements of the embodiment shown in Fig. 2 indicate the cardinality of the respective link. "*" indicates a plurality, i.e. at least one. "2" indicates exactly two. That is, e.g. a interface may transport a plurality of services, whereas a service has exactly two interfaces as endpoints.

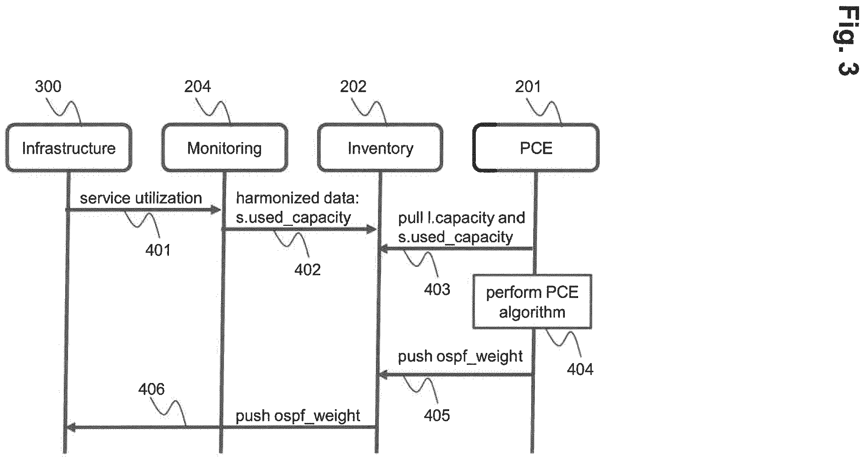

Fig. 3 shows a flow diagram of a traffic routing according to an embodiment of the example according to Fig. 2. The infrastructure 300 is, preferably continuously, sending measured data 401, preferably about the service utilization, to the monitoring component 204. The monitoring component processes the received data and sends the processed data 402 to the inventory 202. The monitoring component 204 preferably harmonizes the raw data from the infrastructure 300 and imports it to the inventory 202. The processed data preferably comprises data about the used capacity s.used_capacity. In the inventory 202 the service capacity is modeled as the MO s.used_capacity.

In a preferred embodiment the PCE 201 pulls 403 the link capacity, i.e. l.capacity, and the used capacity, i.e. s.used_capacity, for a link from the inventory 202. In a preferred embodiment, the data exchange between the PCE and the inventory is based on a predetermined time period and/or on a predetermined trigger.

The PCE 201 performs a PCE algorithm 404 based on the pulled data and pushes 405 a calculated OSPF weight, ospf_weight to the inventory 202. The inventory pushes, i.e. provisions, the OSPF weight, i.e. ospf_weight, to the infrastructure 300. The infrastructure 300, in a preferred embodiment a router, is managed accordingly.

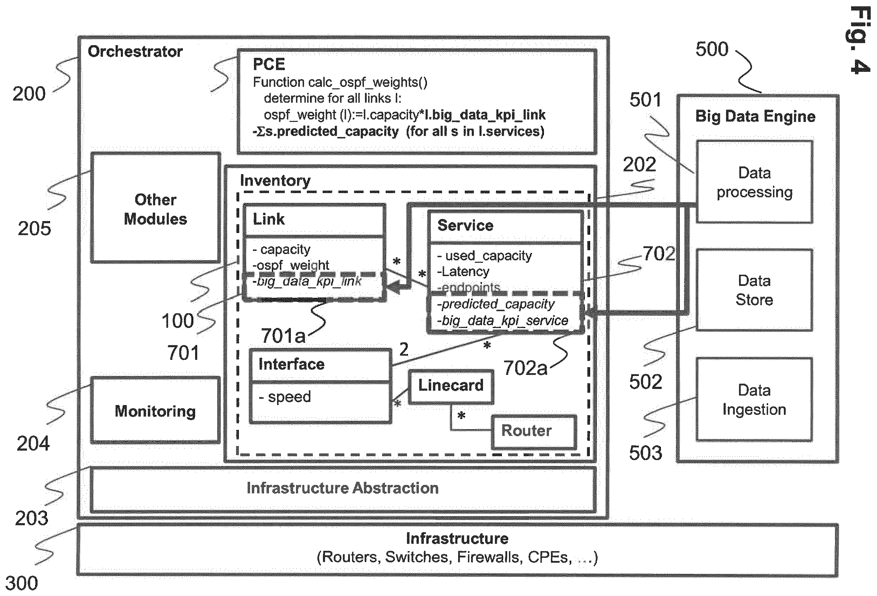

Fig. 4 shows a MS according to an embodiment of the invention. The MS 200 is based on the embodiment of the MS 200 as shown in Fig. 2. The embodiment of Fig. 4 further comprises a big data engine 500. The big data engine 500 comprises a data processing unit 501, a data store 502, and a data ingestion unit 503. It is noted that the "*" and "2" as shown next to the links between elements of the embodiment shown in Fig. 4 indicate the cardinality of the respective link as discussed above.

The model 100 in the inventory 202 of the orchestrator 200 compared to the above embodiment further comprises an extended number of attributes 701a and 702a, i.e. extended MO. The extended MO 701a and 702a are hereinafter marked in *italic letters.* These extended MO 701a and 702a can be filled from an external source. In an embodiment the extended MO 701a and 702a are filled by the big data engine 500, preferably by the data processing unit 501 thereof.

In an embodiment the PCE algorithm uses generic attributes, i.e. MOs, such as *big*_*data*_*kpi*_*link* 701a of the link and *big data kpi*_*service* 702a of the Service. These generic MOs are used as placeholders in the model 100 and used to account for modeling of non-anticipated MOs.

In an embodiment the extended MOs can be filled by an external source, preferably via a suitable API. In principle all MOs of a MS can be extended MOs, which can be filled by an external source. In particular an extended MO, can also be the result of the MS algorithm itself. That is, i.e. in the above embodiment, the OSPF weight itself. With such a configuration, the external system, preferably the big data engine 500, can completely take over the calculation of the MS algorithm, preferably the traffic routing. That is, in the above embodiment, the PCE of the MS would only be a placeholder.

Thus, based on this flexible embodiment, is possible to flexibly shift the distribution of intelligence, computing resources, and/or responsibilities between the MS, e.g. the orchestrator 200, and the external system, i.e. the big data engine 500.

In a further embodiment, which is not part of the invention as claimed, in addition or in alternative to the generic attributes also specific attributes are used. The function of these specific attributes is known to the system designer, i.e. they can be anticipated. However, said specific attributes can not be filled by the MS, e.g. because the required data does not originate from within the managed system. Thus, an external source is required, preferably a big data engine.

In a preferred embodiment the big data engine may be configured to recognize a pattern in the services and the current capacities. The recognized pattern may e.g. be that the service capacity is reduced during the morning and increases during the afternoon or that when the service capacity rises by a predetermined value within a predetermined time (e.g. 10% in 15 minutes), the probability is high that the aggregated capacity will further increase by a certain amount within a certain amount of time (e.g. 40% with the few next minutes).

This allows predicting, e.g. flashmob-events or soccer games. The skilled person realizes that many further use cases are conceivable based on said pattern recognition according to the invention.

In a preferred embodiment the big data engine 500 is configured to manipulate the PCE 201 of an orchestrator 200 based on the pattern recognition. This is achieved by selectively filling the relevant MOs. In the above embodiment, the e.g. MO s.predicted_capacity is filled by the big data engine 500 such that the PCE 201 calculates a new routing which is adapted to the event predicted by the pattern recognition of the big data engine.

In a preferred embodiment the weight of a link, i.e. ospf_weight(l), is calculated by determining the capacity of a link, i.e. l.capacity multiplied with l.big_data_kpi_link, and subtracting the predicted capacity, which is the sum of all the predicted capacity of the services, i.e. sum (s.predicted_capacity). Therefore, the weight of a link corresponds to the *predicted* remaining, rather than the *actual* remaining, capacity of said link. Using the generic MO l.big_data_kpi_link, it is possible to further influence the ultimate weight using some KPI that is calculated by the big data engine 500 and potentially not anticipated by the designer.

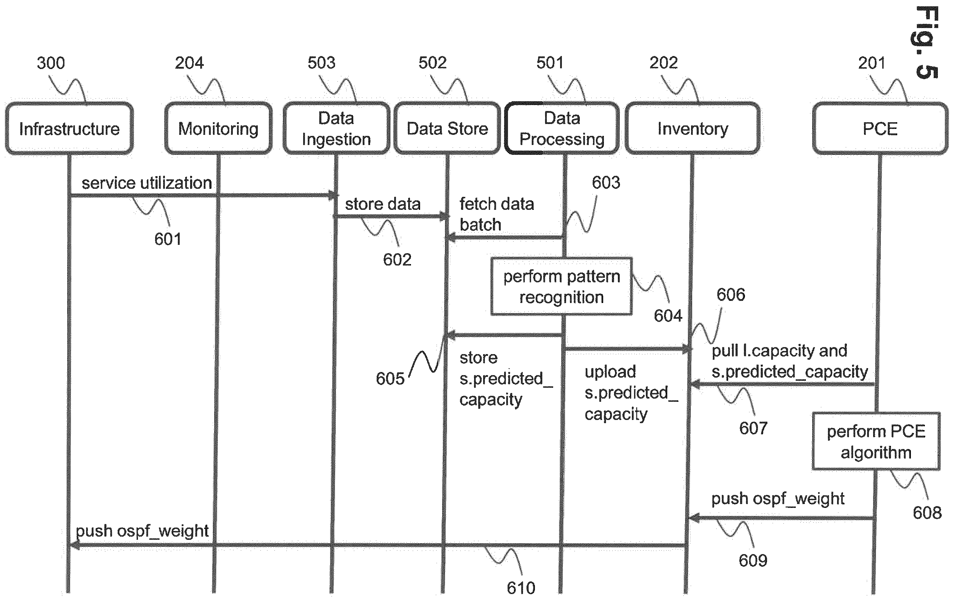

Fig. 5 shows a flow diagram of a traffic routing according to an embodiment of the invention according to Fig. 4. Instead of a monitoring 204 of the MS a data ingestion layer 503 of a big data engine 500 collects 601 the service capacity from the infrastructure 300. That is the infrastructure send data 601 to the data ingestion layer 503 of the big data engine 500. In the big data engine the received data is stored 602 in the data store 502. The big data engine also performs a data processing 604. In detail, for the data processing the data processing unit 501 of the big data engine 500 fetches a data batch 603 from the data store 502 of the big data engine 500. The data processing is preferably a pattern recognition, preferably based on a plurality of data, preferably from a data history. Based on said pattern recognition an aggregated value is determined, i.e. *s.predicted capacity,* which is stored 605 in the data store 502. Additionally or alternatively, the aggregated value is uploaded 606 to the inventory 202 of the MS.

It is noted that the direction of the data transfer as shown in Figs. 3 and 5, i.e. whether or not a push or a pull mechanism is used, is interchangeable and depending on a specific implementation of the embodiment. The shown directions are a preferred embodiment. The skilled person is aware of the alternative implementations.

In a preferred embodiment the aggregated value is uploaded, i.e. filled into, an extended MO of the model in the inventory. The PCE 201 of the MS further pulls 607 the link capacity MO,.i.e. l.capacity, which is a MO originating from within the managed system and the corresponding MO from the big data engine, i.e. *s.predicted capacity.* Subsequently the PCE performs 608 the PCE algorithm based on the normal MO and the extended MO and pushes 609 the calculated data, i.e. ospf_weight, to the inventory 202. An embodiment of the calculation of ospf_weight is discussed with respect to Fig. 4 above. The OSPF weight is provisioned to the infrastructure 300, i.e. pushed 610 to the infrastructure 300.

The skilled person realizes that Fig. 2 and Fig.4 are the most extreme embodiments. Further embodiments may be based on a mixture of both embodiments. That is, some MOs are filled by the monitoring 204 of the MS 200 and some are filled by an external source, preferably a big data engine 500. However, the invention is defined in the independent claims as appended. Advantageous features are set out in the dependent claims.

### Abbreviations

- API: Application Programming Interface;
- CE: Customer Edge;
- EMS: Element Management Systems;
- IP: Internet Protocol;
- IS-IS: Intermediate System to Intermediate System Protocol;
- MO: Managed Object;
- MS: Management System;
- NMS: Network Management Systems;
- OSPF: Open Shortest Path First, OSPF;
- PCE: Path Computation Engine;
- VPN: Virtual Private Network; and
- VRF: Virtual Routing & Forwarding.

## Claims

1. A method for managing telecommunication infrastructure (300),
wherein a management system, MS, (200) comprises at least one internal model (100) of physical and logical components of the telecommunication infrastructure,
wherein the internal model (100) comprises at least one managed object, MO; and the MS (200) is configured to manage the telecommunication infrastructure (300) based on a control protocol, preferably an OSPF and/or an IS-IS;
**characterized in that** said at least one MO of the MS (200) is an extended MO (701a, 702a) and is configured to be filled by a data processing unit (501) of a big data engine (500) via a suitable API;
wherein the extended MO (701a, 702a) is configured to use generic attributes as placeholders in the model (100) and to account for modeling of non-anticipated MOs.
wherein the method comprises the steps of:
the telecommunication infrastructure (300) sending data to a data ingestion layer (503) of the big data engine (500);
at the big data engine (500) receiving and storing the data in a data store (503);
at the big data engine (500) fetching a data batch from the data store (503) and performing data processing to determine the generic attributes of the extended MO (701a, 702a);
at the big data engine (500) uploading the generic attributes to the MS (200);
at the MS (200) updating the extended MO (701a, 701b)with the generic attributes received from the big data engine (500); and
at the MS (200) adapting weights used in the control protocol based on the generic attributes for the at least one extended MO (701a, 702a).

2. The method according to claim 1, wherein the telecommunication infrastructure (300) is a physical infrastructure and/or a virtualized infrastructure.

3. The method according to claim 1, wherein the MS (200) is at least one of an element management system, a network management system or an orchestrator.

4. The method according to any one of claims 1 to 3, wherein the telecommunication infrastructure (300) is an IP-based backbone of a telecommunication network.

5. A system for managing telecommunication infrastructure,
comprising a management system, MS, (200) and a big data engine (500),
wherein the management system, MS, (200) comprises at least one internal model (100) of physical and logical components of the telecommunication infrastructure (300),
wherein the internal model (100) comprises at least one managed object, MO; and the MS (200) is configured to manage the telecommunication infrastructure (300) based on a control protocol, preferably an OSPF and/or an IS-IS;
**characterized in that**
said at least one MO of the MS (200) is an extended MO (701a, 702a) and is configured to be filled by a data processing unit (501) of the big data engine (500) via a suitable API;
wherein the extended MO (701a, 702a) is configured to use generic attributes as placeholders in the model (100) and to account for modeling of non-anticipated MOs.
wherein the telecommunication infrastructure (300) is configured to send data to a data ingestion layer (503) of the big data engine (500);
wherein the big data engine (500) is configured to receive and store the data in a data store (502);
wherein the big data engine (500) is configured to fetch a data batch from the data store (502) and to perform data processing to determine the generic attributes of the extended MO (701a, 702a);
wherein the big data engine (500) is configured to upload the generic attributes to the MS (200);
wherein the MS (200) is configured to update the extended MO (701a, 701b) with the generic attributes received from the big data engine (500); and
wherein the MS (200) is configured to adapt weights used in the control protocol based on the generic attributes for the at least one extended MO (701a, 702a). .

6. The system according to claim 5, wherein the telecommunication infrastructure (300) is a physical infrastructure and/or a virtualized infrastructure and/or wherein the MS (200) is at least one of an element management system, a network management system or an orchestrator.

7. The system according to any one of claims 5 or 6, wherein the telecommunication infrastructure (300) is an IP-based backbone of a telecommunication network.

8. A computer program comprising instructions which, when the program is executed by a computer, cause the computer to carry out the steps of the method of any one of claims claim 1 to 4.

9. A computer-readable medium comprising instructions which, when executed by a computer, cause the computer to carry out the steps of the method of any one of claims 1 to 4.

## Patentansprüche

1. Verfahren zum Verwalten einer Telekommunikationsinfrastruktur (300), wobei ein Verwaltungssystem, MS, (200) mindestens ein internes Modell (100) physikalischer und logischer Komponenten der Telekommunikationsinfrastruktur aufweist,
wobei das interne Modell (100) mindestens ein verwaltetes Objekt, MO, aufweist; und das MS (200) konfiguriert ist, um die Telekommunikationsinfrastruktur (300) basierend auf einem Steuerprotokoll, vorzugsweise einem OSPF und/oder einem IS-IS, zu verwalten;
**dadurch gekennzeichnet, dass** das mindestens eine MO des MS (200) ein erweitertes MO (701a, 702a) ist und konfiguriert ist, um durch eine Datenverarbeitungseinheit (501) einer Big-Data-Engine (500) über eine geeignete API gefüllt zu werden;
wobei das erweiterte MO (701a, 702a) konfiguriert ist, um generische Attribute als Platzhalter in dem Modell (100) zu verwenden und um eine Modellierung von nicht vorhergesehenen MOs zu berücksichtigen.
wobei das Verfahren die Schritte aufweist:
durch die Telekommunikationsinfrastruktur (300), Senden von Daten an eine Datenaufnahmeschicht (503) der Big-Data-Engine (500);
in der Big-Data-Engine (500), Empfangen und Speichern der Daten in einem Datenspeicher (503);
in der Big-Data-Engine (500), Abrufen eines Datenstapels aus dem Datenspeicher (503) und Durchführen einer Datenverarbeitung, um die generischen Attribute des erweiterten MO (701a, 702a) zu bestimmen;
in der Big-Data-Engine (500), Hochladen der generischen Attribute in das MS (200);
in dem MS (200), Aktualisieren des erweiterten MO (701a, 701b) mit den von der Big-Data-Engine (500) empfangenen generischen Attributen; und
in dem MS (200), Anpassen von Gewichtungen, die in dem Steuerprotokoll verwendet werden, basierend auf den generischen Attributen für das mindestens eine erweiterte MO (701a, 702a).

2. Verfahren nach Anspruch 1, wobei die Telekommunikationsinfrastruktur (300) eine physikalische Infrastruktur und/oder eine virtualisierte Infrastruktur ist.

3. Verfahren nach Anspruch 1, wobei das MS (200) mindestens eines von einem Elementverwaltungssystem, einem Netzwerkverwaltungssystem oder einem Orchestrator ist.

4. Verfahren nach einem der Ansprüche 1 bis 3, wobei die Telekommunikationsinfrastruktur (300) ein IP-basiertes Backbone eines Telekommunikationsnetzwerks ist.

5. System zum Verwalten einer Telekommunikationsinfrastruktur,
aufweisend ein Verwaltungssystem, MS, (200) und eine Big-Data-Engine (500),
wobei das Verwaltungssystem, MS, (200) mindestens ein internes Modell (100) physikalischer und logischer Komponenten der Telekommunikationsinfrastruktur (300) aufweist,
wobei das interne Modell (100) mindestens ein verwaltetes Objekt, MO, aufweist; und das MS (200) konfiguriert ist, um die Telekommunikationsinfrastruktur (300) basierend auf einem Steuerprotokoll, vorzugsweise einem OSPF und/oder einem IS-IS, zu verwalten;
**dadurch gekennzeichnet, dass**
das mindestens eine MO des MS (200) ein erweitertes MO (701a, 702a) ist und konfiguriert ist, um durch eine Datenverarbeitungseinheit (501) der Big-Data-Engine (500) über eine geeignete API gefüllt zu werden;
wobei das erweiterte MO (701a, 702a) konfiguriert ist, um generische Attribute als Platzhalter in dem Modell (100) zu verwenden und um die Modellierung von nicht vorhergesehenen MOs zu berücksichtigen.
wobei die Telekommunikationsinfrastruktur (300) konfiguriert ist, um Daten an eine Datenaufnahmeschicht (503) der Big-Data-Engine (500) zu senden;
wobei die Big-Data-Engine (500) konfiguriert ist, um die Daten zu empfangen und in einem Datenspeicher (502) zu speichern;
wobei die Big-Data-Engine (500) konfiguriert ist, um einen Datenstapel aus dem Datenspeicher (502) abzurufen und um eine Datenverarbeitung durchzuführen, um die generischen Attribute des erweiterten MO (701a, 702a) zu bestimmen;
wobei die Big-Data-Engine (500) konfiguriert ist, um die generischen Attribute in das MS (200) hochzuladen;
wobei das MS (200) konfiguriert ist, um das erweiterte MO (701a, 701b) mit den von der Big-Data-Engine (500) empfangenen generischen Attributen zu aktualisieren; und
wobei das MS (200) konfiguriert ist, um in dem Steuerprotokoll verwendete Gewichte basierend auf den generischen Attributen für das mindestens eine erweiterte MO (701a, 702a) anzupassen.

6. System nach Anspruch 5, wobei die Telekommunikationsinfrastruktur (300) eine physikalische Infrastruktur und/oder eine virtualisierte Infrastruktur ist und/oder wobei das MS (200) mindestens eines von einem Elementverwaltungssystem, einem Netzwerkverwaltungssystem oder einem Orchestrator ist.

7. System nach einem der Ansprüche 5 oder 6, wobei die Telekommunikationsinfrastruktur (300) ein IP-basiertes Backbone eines Telekommunikationsnetzwerks ist.

8. Computerprogramm, aufweisend Anweisungen, die, wenn das Programm durch einen Computer ausgeführt wird, den Computer veranlassen, die Schritte des Verfahrens nach einem der Ansprüche 1 bis 4 vorzunehmen.

9. Computerlesbares Medium, aufweisend Anweisungen, die, wenn sie durch einen Computer ausgeführt werden, den Computer veranlassen, die Schritte des Verfahrens nach einem der Ansprüche 1 bis 4 vorzunehmen.

## Revendications

1. Procédé de gestion d'infrastructure de télécommunication (300),
dans lequel un système de gestion, MS, (200) comprend au moins un modèle interne (100) de composants physiques et logiques de l'infrastructure de télécommunication,
dans lequel le modèle interne (100) comprend au moins un objet géré, MO ; et le MS (200) est configuré pour gérer l'infrastructure de télécommunication (300) sur la base d'un protocole de commande, de préférence un OSPF et/ou un IS-IS ;
**caractérisé en ce que** ledit au moins un MO du MS (200) est un MO étendu (701a, 702a) et est configuré pour être rempli par une unité de traitement de données (501) d'un moteur de mégadonnées (500) par l'intermédiaire d'une API appropriée ;
dans lequel le MO étendu (701a, 702a) est configuré pour utiliser des attributs génériques en tant qu'espaces réservés dans le modèle (100) et pour tenir compte d'une modélisation de MO non anticipés,
dans lequel le procédé comprend les étapes consistant à :
envoyer, par l'infrastructure de télécommunication (300), des données à une couche d'ingestion de données (503) du moteur de mégadonnées (500) ;
au niveau du moteur de mégadonnées (500), recevoir et stocker des données dans un magasin de données (503) ;
au niveau du moteur de mégadonnées (500), extraire un lot de données du magasin de données (503) et réaliser un traitement de données pour déterminer les attributs génériques du MO étendu (701a, 702a) ;
au niveau du moteur de mégadonnées (500), télécharger les attributs génériques vers le MS (200) ;
au niveau du MS (200), mettre à jour le MO étendu (701a, 701b) avec les attributs génériques reçus en provenance du moteur de mégadonnées (500) ; et
au niveau du MS (200), adapter des pondérations utilisées dans le protocole de commande sur la base des attributs génériques pour l'au moins un MO étendu (701a, 702a).

2. Procédé selon la revendication 1, dans lequel l'infrastructure de télécommunication (300) est une infrastructure physique et/ou une infrastructure virtualisée.

3. Procédé selon la revendication 1, dans lequel le MS (200) est au moins l'un parmi un système de gestion d'élément, un système de gestion de réseau ou un orchestrateur.

4. Procédé selon l'une quelconque des revendications 1 à 3, dans lequel l'infrastructure de télécommunication (300) est une dorsale basée sur IP d'un réseau de télécommunication.

5. Système de gestion d'infrastructure de télécommunication,
comprenant un système de gestion, MS, (200) et un moteur de mégadonnées (500),
dans lequel le système de gestion, MS, (200) comprend au moins un modèle interne (100) de composants physiques et logiques de l'infrastructure de télécommunication (300),
dans lequel le modèle interne (100) comprend au moins un objet géré, MO ; et le MS (200) est configuré pour gérer l'infrastructure de télécommunication (300) sur la base d'un protocole de commande, de préférence un OSPF et/ou un IS-IS ;
**caractérisé en ce que**
ledit au moins un MO du MS (200) est un MO étendu (701a, 702a) et est configuré pour être rempli par une unité de traitement de données (501) du moteur de mégadonnées (500) par l'intermédiaire d'une API appropriée ;
dans lequel le MO étendu (701a, 702a) est configuré pour utiliser des attributs génériques en tant qu'espaces réservés dans le modèle (100) et pour tenir compte d'une modélisation de MO non anticipés,
dans lequel l'infrastructure de télécommunication (300) est configurée pour envoyer des données à une couche d'ingestion de données (503) du moteur de mégadonnées (500) ;
dans lequel le moteur de mégadonnées (500) est configuré pour recevoir et stocker les données dans un magasin de données (502) ;
dans lequel le moteur de mégadonnées (500) est configuré pour extraire un lot de données du magasin de données (502) et pour réaliser un traitement de données afin de déterminer les attributs génériques du MO étendu (701a, 702a) ;
dans lequel le moteur de mégadonnées (500) est configuré pour télécharger les attributs génériques vers le MS (200) ;
dans lequel le MS (200) est configuré pour mettre à jour le MO étendu (701a, 701b) avec les attributs génériques reçus en provenance du moteur de mégadonnées (500) ; et
dans lequel le MS (200) est configuré pour adapter des pondérations utilisées dans le protocole de commande sur la base des attributs génériques pour l'au moins un MO étendu (701a, 702a).

6. Système selon la revendication 5, dans lequel l'infrastructure de télécommunication (300) est une infrastructure physique et/ou une infrastructure virtualisée et/ou dans lequel le MS (200) est au moins l'un parmi un système de gestion d'élément, un système de gestion de réseau ou un orchestrateur.

7. Système selon l'une quelconque des revendications 5 ou 6, dans lequel l'infrastructure de télécommunication (300) est une dorsale basée sur IP d'un réseau de télécommunication.

8. Programme informatique comprenant des instructions qui, lorsque le programme est exécuté par un ordinateur, amènent l'ordinateur à effectuer les étapes du procédé selon l'une quelconque des revendications 1 à 4.

9. Support lisible par ordinateur comprenant des instructions qui, lorsqu'elles sont exécutées par un ordinateur, amènent l'ordinateur à effectuer les étapes du procédé selon l'une quelconque des revendications 1 à 4.
